# EUROPÄISCHE PATENTANMELDUNG

(11) **EP 4 454 729 A1**
(43) Veröffentlichungstag der Anmeldung: **30.10.2024**
(21) Anmeldenummer: 24168986.8
(22) Anmeldetag: 08.04.2024
(51) Int. Cl.: B01D 19/00, B01D 29/23, B01D 29/58, B01D 36/00

(54) **ABSCHEIDEVORRICHTUNG**

(30) Priorität: 27.04.2023 DE 102023001703
(71) Anmelder: RT-Filtertechnik GmbH, 88048 Friedrichshafen (DE)
(72) Erfinder: Wozniak, Sven Peter, 78464 Konstanz (DE); Schönfeld, Dirk, 99510 Apolda (DE); van Uffelen, Florentin Gabriel, 88085 Langenargen (DE); Walek, Markus Stefan, 88682 Salem (DE); Heßler, Dominic, 99610 Sömmerda (DE)
(74) Vertreter: Bartels und Partner, Patentanwälte

(57) **Zusammenfassung**

2. Abscheidevorrichtung zumindest bestehend aus zwei Abscheideelementen (10, 12), die in Fluid-Durchströmungsrichtung gesehen hintereinander angeordnet sind, dadurch gekennzeichnet, dass die beiden Abscheideelemente (10, 12) der Gasabscheidung dienen, dass das jeweils gasabscheidende Abscheideelement (10, 12) mindestens zwei Lagen (24, 26) aufweist, die jeweils Fluiddurchlässe unterschiedlicher Größe aufweisen, und dass in Fluid-Durchströmungsrichtung gesehen, die Lage (24) mit den größeren Fluiddurchlässen der Lage (26) mit den kleineren Fluiddurchlässen vorangeht.

## Beschreibung

Die Erfindung betrifft eine Abscheidevorrichtung zumindest bestehend aus zwei Abscheideelementen, die in Fluid-Durchströmungsrichtung gesehen hintereinander angeordnet sind.

Durch DE 10 2021 002 428 A1 ist eine Filtervorrichtung zumindest bestehend aus zwei koaxial zueinander angeordneten Filterelementen bekannt, die zwischen sich einen ringförmigen Hohlraum respektive Fluidraum begrenzen, wobei die dem Hohlraum zugewandte Innenseite des äußeren Filterelementes zumindest teilweise eine Abscheideeinrichtung für Gasblasen, wie Luftblasen, aufweist und wobei der Hohlraum kopfseitig in mindestens eine Abgabeöffnung für dahingehende Gasblasen ausmündet. Für die angesprochene Abscheideeinrichtung respektive auf der Innenumfangsseite des äußeren Filterelementes wird eine hierfür geeignete Medienlage mit Koaleszenzeigenschaft eingesetzt, die aus einem Vlies besteht, mit einem vorgegebenen Porengrößengradienten, das ausgehend von einer zuinnerst liegenden Feinstruktur zur Abströmseite hin gesehen zusehends in eine Grobstruktur übergeführt wird, was beim Durchströmen des äußeren Filtermediums mit Fluid dazu führt, dass die in dem Fluid regelmäßig feinst dispergierten Blasen aufgrund der Koaleszenzeigenschaft, der insoweit als Abgabeschicht konzipierten Medienlage, zu volumetrisch größeren Einheiten zusammengeführt wird. Das jeweils bevorzugt zum Einsatz kommende Fasermaterial, regelmäßig in Form des genannten Vlieses, kann Polyesterfasern aufweisen, was die Entgasungsprozesse aus dem Fluid erleichtert.

Durch WO 2020/165146 A1 ist ein Abscheideelement zum Abscheiden von Gasblasen aus einer Flüssigkeit, insbesondere aus Hydrauliköl, bekannt, das einen Volumenkörper mit einer offenporigen Materialstruktur umfasst, die eine Vielzahl von Zellen aufweist, die derart zueinander versetzt angeordnet sind, dass eine Vielzahl von Strömungswegen zur Führung von Gasblasen durch die Materialstruktur labyrinthartig verlaufen, die einen Kontaktbereich umfasst, in dem sich wenigstens zwei der Strömungswege zumindest abschnittsweise aneinander annähern, sodass sich im Betrieb die auf den Strömungswegen geführten Gasblasen einander kontaktieren und sich so zu einer jeweils größeren Gasblase zwecks deren Austrag aus der Flüssigkeit verbinden. Eine größere Gasblase weist regelmäßig eine höhere Auftriebskraft auf, sodass diese aus der Flüssigkeit erleichtert abführbar ist, indem sie schneller in dieser aufsteigt. Diese Abscheidewirkung aufgrund des Archimedischen Prinzips wird dadurch begünstigt, dass durch den labyrinthartigen Verlauf der Strömungswege zwanglos eine Vergrößerung der Gasblasen erfolgt, wodurch diese aus der Flüssigkeit effizient abgeschieden werden können.

Durch DE 10 2018 118 139 A1 ist in anderem Zusammenhang bei einer Vorrichtung zum Aufnehmen von Öl von einer Wasseroberfläche festgestellt worden, dass hydrophobe Flächengebilde in Form gitterartiger Strukturen die Möglichkeit eröffnen unter Wasser eine Schicht aus Gas auf der Oberfläche zu halten. Diese Eigenschaft wird fachsprachlich als Salvinia-Effekt bezeichnet, der die Stabilisierung einer Luftschicht auf einer Oberfläche unter einer Flüssigkeit beschreibt.

Ausgehend von diesem Stand der Technik liegt der Erfindung der Aufgabe zugrunde, die beschriebenen Lösungen dahingehend weiter zu verbessern, dass es bei einer Abscheidevorrichtung zu einer verbesserten Gasabscheidung, insbesondere Luftabscheidung, kommt.

Eine dahingehende Aufgabe löst eine Abscheidevorrichtung mit den Merkmalen des Patentanspruches 1 in seiner Gesamtheit.

Als erfindungswesentlich wird dabei angesehen, dass die beiden Abscheideelemente der Gasabscheidung dienen, dass das jeweils gasabscheidende Abscheideelement mindestens zwei Lagen aufweist, die jeweils Fluiddurchlässe unterschiedlicher Größe aufweisen, und dass in Fluid-Durchströmungsrichtung gesehen, die Lage mit den größeren Fluiddurchlässen, der Lage mit den kleineren Fluiddurchlässen vorangeht. Besonders bevorzugt ist dabei vorgesehen, dass die Lage mit den kleineren Fluiddurchlässen, als Zwischenlage, zwischen zwei Lagen mit demgegenüber größeren Fluiddurchlässen, als Decklagen, aufgenommen ist. Ferner sind in bevorzugter Weise die einzelnen Abscheideelemente koaxial zueinander angeordnet.

Es ist für einen Durchschnittsfachmann auf dem Gebiet von Abscheidevorrichtungen, die sich mit dem Thema Gasabscheidung beschäftigen, überraschend, dass er durch diesen speziellen Lagenaufbau zu deutlich besseren Abscheideresultaten gelangt, ohne hierfür erst komplexe Labyrinthstrukturen mittels Zellen in einer Abscheideelementschicht aufbauen zu müssen. Als jeweilige Lage kommen bevorzugt Gewebe zum Einsatz, aber auch Netz- oder Gitterstrukturen.

Neben der Koaleszenzeigenschaft des speziellen Lagenaufbaus, bei dem kleinere Luftblasen unter Bildung von größeren Luftblasen zusammengefasst, nach dem Archimedischen Prinzip durch Aufsteigen in der Flüssigkeit aus dieser abgeschieden werden, hat sich im Rahmen praktischer Versuche gezeigt, dass der Lagenaufbau, insbesondere in Form eines Gewebeaufbaus auch zu dem sogenannten Salvinia-Effekt mit beiträgt, bei dem sich eine Gasschicht respektive Luftschicht auf der Oberfläche einer Gewebe- oder Lagenstruktur mehr oder minder dauerhaft stabilisiert und dergestalt zunächst anlagert, wobei der jeweilige Durchlass- oder Maschenrand der Lagenstruktur eine Barriere für die Luftschicht bildet, die dann im Rahmen des üblichen Filtrationsbetriebes, dennoch von der Lagenstruktur abgelöst, eine vergrößerte Gasblase ausbildet, die im Fluid nach oben steigt. Insoweit kommen hier zwei unterschiedliche Abscheidemechanismen (Koaleszenz und Salvinia-Effekt) zum Tragen, was die Abscheideleitung für die Abscheidevorrichtung erhöht. Dies hat so keine Entsprechung im Stand der Technik.

Bei einer bevorzugten Ausführungsform der erfindungsgemäßen Abscheidevorrichtung sind alle eingesetzten Gewebelagen in Leinwandbindung ausgeführt, was eine enge Verkreuzung von Kett- und Schussfäden erlaubt. Die dahingehende Leinwandbindung wird fachsprachlich auch als Webart "glatt" bezeichnet. Neben einer kostengünstigen Herstellung erweist sich eine solche Leinwandbindung auch als äußerst eigenstabil und die angestrebte Durchlass- oder Porengröße im Gewebeverbund lässt sich sehr genau vorgeben.

Bei einer weiteren bevorzugten Ausführungsform der erfindungsgemäßen Abscheidevorrichtung sind die beiden Decklagen gleich und die Zwischenlage hiervon verschieden. Unabhängig von der Ausbildung von Decklagen und Zwischenlage liegen diese, ohne selbst miteinander verwoben oder verflochten zu sein, flächig aneinander und werden im Rahmen der Herstellung eines Abscheideelementes gemeinsam miteinander plissiert.

Bevorzugt weist dabei die jeweilige Decklage einzelne
- Durchlässe auf, die jeweils etwa 5 bis 11 Mal so groß sind wie der jeweilige Durchlass der in Durchströmrichtung gesehen nachfolgenden Lage, und
- Fadendurchmesser auf, die jeweils etwa 2 bis 5 Mal so groß sind wie der jeweilige Fadendurchmesser der nachfolgenden Lage.

Dergestalt bestehen die einzelnen Lagen, insbesondere Gewebelagen, bevorzugt aus Metalldraht; es können aber auch ohne weiteres Kunststoffdrähte Verwendung finden oder geeignetes Fasermaterial.

Je nach konkreter Ausgestaltung der jeweiligen Gewebelage kann es zu einer Gasabscheidung auf der Anströmseite des gasabscheidenden Abscheideelementes kommen und/oder beim Durchströmen desselben. Grundsätzlich können die beiden Abscheideelemente in Hintereinaneranordnung mit einer Fluid-Durchströmrichtung von innen nach außen durchströmt werden, was man fachsprachlich als In-to-Out bezeichnet oder in umgekehrter Durchströmungsrichtung von außen nach innen, was fachsprachlich mit Out-to-In bezeichnet ist.

Bei einer weiteren bevorzugten Ausführungsform der erfindungsgemäßen Abscheidevorrichtung ist vorgesehen, dass die beiden plissierten Abscheideelemente konzentrisch zueinander angeordnet zwischen sich einen ringförmigen Hohl- oder Fluidraum begrenzen. Dieser Hohl- oder Fluidraum führt zu einer Vergleichmäßigung des Fluids bei der Element-Durchströmung und kann dergestalt eine Art Ruhezone ausbilden, was den Gasaustrag aus dem Fluid, beispielsweise in Form von Hydraulikmedium, erleichtern hilft.

Alternativ kann in platzsparender Weise vorgesehen sein, dass abstandsfrei das eine gasabscheidende Abscheideelement in das andere gasabscheidende Abscheideelement mit seinen Lagen mit eingefaltet ist.

Bei einer weiteren bevorzugten Ausführungsform der erfindungsgemäßen Abscheidevorrichtung ist vorgesehen, dass beide Abscheideelemente eine als Ganzes tauschbare Bau- oder Abscheideeinheit bilden. Vorzugsweise ist hierbei vorgesehen, dass die beiden gasabscheidenden Abscheideelemente gemeinsam einen Innenraum miteinander begrenzen, der die Zulauf- oder Unfiltratseite darstellt und dass ausgehend vom Innenraum in Fluid-Durchströmungsrichtung gesehen von innen nach außen der Fluidfluss durch die Abscheideelemente gleichermaßen erfolgt. Ferner können die beiden Abscheideelemente als Einheit eine Tankeinbaugruppe miteinander bilden, insbesondere in der Art von Rücklauffiltern konzipiert sein.

Gegenstand der Erfindung ist auch ein Abscheideelement, insbesondere vorgesehen für eine Abscheidevorrichtung wie vorstehend beschrieben, das aus mindestens einem zweilagigen, vorzugsweise plissierten, Gewebe besteht und dass alle Gewebelagen in Leinwandbindung ausgeführt sind, mit einer Maschenweite zwischen 200 bis 800 *µ*m und einem Fadendurchmesser zwischen 100 bis 200 *µ*m für die jeweilige Decklage sowie mit einer Maschenweite von 15 bis 120 *µ*m und einem Fadendurchmesser von 30 bis 80 *µ*m für die jeweilige Zwischenlage.

Besonders bevorzugt weist dabei die jeweilige Decklage eine Durchlass- oder Maschenweite von 530 *µ*m auf, bei einem Fadendurchmesser von 160 *µ*m. Die jeweilige Zwischenlage kann dabei unterschiedlich ausgeführt sein, beispielsweise eine Durchlass- oder Maschenweite von 20 *µ*m aufweisen, bei einem Fadendurchmesser von 35 *µ*m. Bei einer anders aufgebauten Zwischenlage beträgt die Maschenweite 100 *µ*m, bei einem Drahtdurchmesser von 60 *µ*m.

Im Folgenden wird die erfindungsgemäße Abscheidevorrichtung nebst Abscheideelement anhand von Ausführungsbeispielen nach der Zeichnung näher erläutert. Dabei zeigen die
- Figuren 1 bis 7: in rein prinzipieller Darstellung den möglichen Aufbau einer Abscheidevorrichtung mit zwei gasabscheidenden Abscheideelementen und teilweise dargestelltem Vorrichtungsgehäuse;
- Figur 8: in schematischer Darstellung eine Luftabscheidung auf der Anströmseite A oder bei Durchströmen eines in den Figuren 1 bis 7 dargestellten Abscheideelementes, bestehend aus drei Gewebelagen, auf seiner Abströmseite B;
- Figur 9: in der Art eines perspektivischen Längsschnittes eine Abscheidevorrichtung mit Gehäuse, in dem zwei gasabscheidende Abscheideelemente aufgenommen sind;
- Figur 10: in einem halbseitigen Schnitt und nur teilweise die wesentlichen Komponenten einer bodenseitigen Aufnahme der Abscheidevorrichtung nach der Figur 9; und
- Figur 11: eine weitere geänderte Vorrichtungslösung zu der Abscheidevorrichtung nach den Figuren 9 und 10.

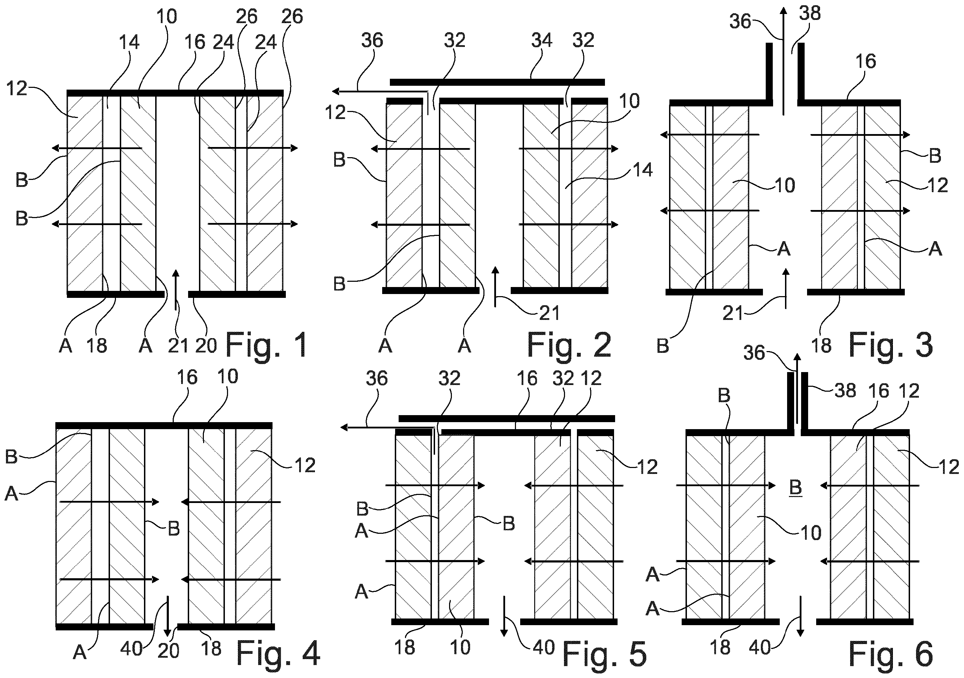

In rein prinzipieller Darstellung und stark vereinfacht zeigt die Figur 1 die wesentlichen Elemente einer Abscheidevorrichtung als Ganzes. Die Abscheidevorrichtung weist zwei Abscheideelemente 10,12 auf, die in Fluid-Durchströmungsrichtung gesehen hintereinander angeordnet sind und die beide der Gasabscheidung, insbesondere der Luftabscheidung, dienen. Die jeweilige Fluid-Durchströmungsrichtung ist in den Figuren 1 bis 8 mit Pfeilen angedeutet. Die beiden Abscheideelemente 10, 12 sind mehrlagig aufgebaut und plissiert sowie konzentrisch zueinander auf Abstand angeordnet und begrenzen mit ihrem jeweiligen Außenumfang bzw. Innenumfang einen ringförmigen Hohlraum als Fluidraum 14. Des Weiteren sind die beiden Abscheideelemente 10, 12 an ihren freien Stirnseiten von zwei Endkappen eingefasst und zwar in Blickrichtung auf die Figur 1 gesehen von einer oberen Endkappe 16 und von einer unteren Endkappe 18. Auch der dahingehende Aufbau ist üblich, so dass an dieser Stelle hierauf nicht mehr näher eingegangen wird. Die untere Endkappe 18 weist eine Mittenöffnung 20 auf, über die der Fluidstrom zugeführt wird, regelmäßig in Form einer Flüssigkeit, die mit Gas, insbesondere in Form von Luft, versetzt ist, wobei die Fluidrichtung am Eintritt insoweit mit einem Pfeil 21 wiedergegeben ist. Demgemäß erfolgt die Durchströmung der Abscheidevorrichtung nach der Figur 1 von innen nach außen (In-to-Out).

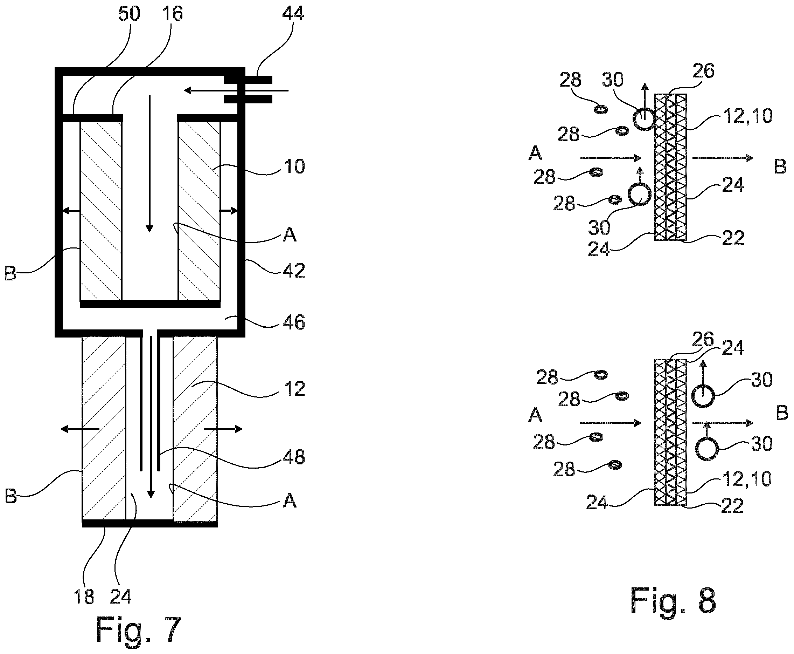

Wie sich insbesondere aus der Darstellung nach der Figur 8 ergibt, weist das jeweils gasabscheidende Abscheideelement 10, 12 einen dreilagigen Gewebeaufbau 22 auf mit zwei Deckgewebelagen 24 und einer dazwischen aufgenommenen Zwischenlage 26. Die Maschenweite respektive der Fluiddurchlass der Zwischenlage 26 ist dabei kleiner als die Maschenweite respektive der Fluiddurchlass der beiden angrenzenden Deckgewebelagen 24. Des Weiteren ist der Fadendurchmesser für den Gewebeaufbau 22 der jeweiligen Deckgewebelage 24 größer als der Fadendurchmesser für die Zwischenlage 26. Die jeweiligen Maschenweiten und Fadendurchmesser betreffend den Gewebeaufbau 22 sind jedenfalls derart gewählt, dass bei der Ausführungsform nach der Figur 1, gemäß der Darstellung nach der Figur 8 oben, es zu einer Koaleszenz von Luftblasen 28 bei der Anströmung des innenliegenden Abscheideelementes 10 von innen nach außen kommt. Die demgemäß zunächst auf der Anströmseite A befindlichen Luftblasen 28 mit kleinem Durchmesser, die gegebenenfalls sich sogar in fein dispergierter Form im Fluidstrom befinden, werden durch den angesprochenen Koaleszenzeffekt mittels des Gewebeaufbaus 22, vorzugsweise Drahtgewebeaufbaus auf der linken Seite zu größeren Luftblasen 30 zusammengeführt, die dann aufgrund des Archimedischen-Prinzips auftriebsbedingt im Fluid aufsteigen und dergestalt in die Umgebung abgeführt werden können, die auch aus dem Inneren eines Vorratstanks gebildet sein kann.

Wie sich des Weiteren aus der Figur 8 unten ergibt, können nach Durchströmen des Filterelementes 10 eventuell die auf der Abströmseite B des inneren Abscheideelementes 10 verbleibenden Luftblasen wiederum zu grö-ßeren Luftblasen 30 zusammengeführt werden, die für einen Abscheidevorgang aus dem Fluid wiederum aufsteigen. Das in Fluiddurchströmungsrichtung gesehen von innen nach außen zuäußerst liegende Abscheideelement 12 kann dann wiederum auf seiner Anströmseite A, gemäß der Darstellung nach der Figur 8 oben, Gasblasen aus der Flüssigkeit abscheiden und ebenso auf seiner außenliegenden Abströmseite B, so dass sich ein Austragsmuster für Gas Anströmseite A, Abströmseite B, Anströmseite A, Abströmseite B für die beiden Abscheideelemente 10, 12 ergibt. Dies führt insgesamt zu sehr hohen Austragraten für die abzutrennende Luft aus der Flüssigkeit. Die aufsteigenden Gasblasen 30 werden dann spätestens auf der Unterseite der oberen Endkappe 16 gesammelt und seitlich gemäß der Pfeildarstellung aus der Abscheidevorrichtung als Ganzes abgeführt. Dem Hohl- oder Fluidraum 14 kommt dabei besondere Bedeutung zu, der sowohl die Gasblasen 30 auf der Abströmseite B des inneren Elementes 10 als auch auf der Anströmseite A des äußeren Elementes 12 zusammenführt, und demgemäß große Mengen etwaig bei der Abscheidung anfallendes Gas aus dem Fluid an zentraler Stelle abführt.

Da die hier angesprochenen Abscheidevorrichtungen regelmäßig sogenannte In-Tanklösungen darstellen, gelangen dergestalt die abgeschiedenen Luftblasen auf die Gasseite des in einem Fluidvorratstank aufgenommenen respektive bevorrateten Fluids. Es kann auch genügen, nur zwei Lagen 24, 26 vorzusehen, wobei in Fluiddurchströmungsrichtung gesehen die Lage 24 mit den größeren Fluiddurchlässen, der Lage 26 mit den kleineren Durchlässen vorangeht. Insoweit ist ein Lagenaufbau innerhalb eines Elementes 10, 12 von "grob" zu "fein" realisiert.

Alle eingesetzten Gewebelagen 24,26 sind in sogenannter Leinwandbindung ausgeführt und bevorzugt sind die beiden Decklagen 24 gleich ausgebildet und die Zwischenlage 26 unterscheidet sich hiervon. Es können Gewebelagen 24, 26 aus Metall- und/oder Kunststoffdrähten zum Einsatz kommen sowie Mischgewebe.

Insbesondere ist vorgesehen, dass die jeweilige Decklage 24 eine Durchlass- oder Maschenweite aufweist, die etwa 5 bis 11 Mal so groß ist wie die Durchlass- oder Maschenweite der jeweiligen Zwischenlage 26. Ferner weist die jeweilige Decklage 24 einen Faden- oder Drahtdurchmesser auf, der etwa 2 bis 5 Mal so groß ist wie der Faden- oder Drahtdurchmesser der jeweiligen Zwischenlage 26. Im speziellen weist die jeweilige Decklage 24 eine Maschenweite zwischen 200 bis 800 *µ*m auf und einen Fadendurchmesser zwischen 100 bis 200 *µ*m. Für die jeweilige Zwischenlage 26 beträgt die Maschenweite von 15 bis 120 *µ*m, bei einem Fadendurchmesser von 30 bis 80 *µ*m.

Als besonders bevorzugt für die Gasabscheidung hat es sich im Rahmen der Behandlung üblicher Fluide, wie Luft aufweisende Hydraulikmedien, erwiesen, die jeweilige Decklage 24 mit einer Maschenweite von 530 *µ*m zu versehen, bei einem Fadendurchmesser von 160 *µ*m. Die jeweilige Zwischenlage 26 ist demgegenüber unterschiedlich ausgeführt, und kann beispielsweise bei einer Ausführungsform eine Maschenweite von 50 *µ*m aufweisen, bei einem Fadendurchmesser von 35 *µ*m. Bei einer demgegenüber anders aufgebauten Zwischenlage 26 beträgt die Maschenweite jedoch 100 *µ*m, bei einem Faden- oder Drahtdurchmesser von 60 *µ*m.

Die Weiteren Ausführungsformen nach den Figuren 2 bis 7 entsprechen im Wesentlichen der Ausführungsform nach der Figur 1 und werden nur noch insofern erläutert, als sie sich maßgeblich von der Lösung nach der Figur 1 unterscheiden.

Bei einer Ausführungsform nach der Figur 2 ist der Elementaufbau wie bei der Figur 1; allein in die obere Endkappe 16 sind einzelne Durchlässe 32 eingebracht, die der Gasblasenabfuhr aus der Abscheidevorrichtung dienen, wobei die Abfuhr über einen Begrenzungsspalt erfolgt zwischen der Oberseite der oberen Endkappe 16 und der Unterseite einer plattenförmigen Gehäuseabdeckung 34. Die Richtung des möglichen Gasblasenaustrags über diesen spaltförmigen Abstandsbereich ist mit einem Pfeil 36 wiedergegeben.

Ansonsten erfolgt die Gasabscheidung A, B, A, B bei der Ausführungsform nach der Figur 2 wie für die Vorrichtung nach der Figur 1 bereits beschrieben.

Bei der Variante nach der Figur 3 sind die beiden gasabscheidenden Abscheideelemente 10, 12 in dichter Packung derart zueinander angeordnet, dass dabei ein Abscheideelement 12 in das andere Abscheideelement 10 auch abstandsfrei mit eingefaltet sein kann. Ansonsten ergibt sich bei einem verbleibenden, zylindrischen Hohlraum 14 wiederum die Abscheidefolge A, B, A, B. Im Übrigen erfolgt zentral eine Gas- oder Luftabscheidung, diesmal hauptsächlich in Pfeilrichtung 36 gesehen, über eine kanalartige Mittenöffnung 38 in der oberen Endkappe 16.

Die Ausführungsform nach der Figur 4 entspricht weitgehend der Ausführungsform nach der Figur 1 mit der Maßgabe, dass nunmehr die Durchströmungsrichtung für das Fluid umgekehrt ist, d.h. das mit dem abzuscheidenden Gas versehene Fluid strömt in Pfeilrichtung gesehen von außen nach innen (Out-to-In) durch die Abscheidevorrichtung mit den beiden Abscheideelementen 10, 12, wobei dahingehend zunächst das äußere Abscheideelement 12 vor dem Element 10 durchströmt ist. Da bei der Ausführungsform nach der Figur 4 in der oberen Endkappe 16 keine Durchlassöffnung 32 vorhanden ist, erfolgt auch bei der Variante nach der Figur 4 der Gasabscheidevorgang im Wesentlichen unterhalb der Endkappe 16 in Richtung ihrer Außenseite. Die Abfuhr des von Gas abgereinigten Flüssigkeitsstroms, beispielsweise in Form von Hydrauliköl, erfolgt hingegen in Pfeilrichtung 40 über die Mittenöffnung 20 in der unteren Endkappe 18. Die Gasabscheidung erfolgt dabei auf der äußeren Anströmseite A sowie der inneren Abströmseite B des äußeren Elementes 12 und der äußeren Anströmseite A sowie der inneren Abströmseite B des inneren Elementes 10.

Die Ausführungsform nach der Figur 5 entspricht wiederum weitestgehend der Ausführungsform nach der Figur 4 mit der Maßgabe, dass der von Gas abgereinigte Fluid- oder Flüssigkeitsstrom in Pfeilrichtung 40 aus der Abscheidevorrichtung gelangt, wohingegen das abgeschiedene Gas, insbesondere Luft, wiederum über die oberen Durchlässe 32 in der oberen Endkappe 16, wie durch den Pfeil 36 angedeutet, die Vorrichtung verlässt. Die Abreinigungsfolge ist dabei unter Bezugnahme auf die Darstellung nach der Figur 8 wie bei der Lösung nach der Figur 4 von außen nach innen A, B, A, B.

Auch bei der Ausführungsform nach der Figur 6 erfolgt die Durchströmung der beiden Abscheideelemente 10, 12 von außen nach innen und etwaig abgeschiedenes Gas wird über die kanalartige Mittenöffnung 38 in der oberen Endkappe 16 in Richtung des Pfeiles 36 abgeführt, wohingegen das vom Gas befreite Fluid die Vorrichtung über die untere Mittenöffnung 40 verlässt. Es versteht sich, dass die aufgezeigte Abscheidevorrichtung natürlich nur dann Gas respektive Luft aus dem Fluid abführen kann, wenn dieses auch mit einem Gas vor Durchführen der Gasabscheidung versetzt ist.

Bei der speziellen Ausführungsform nach der Figur 7 sind nunmehr die beiden Abscheideelemente 10, 12 in Längsrichtung gesehen hintereinander angeordnet. Dabei ist das eine Abscheideelement 10 in einem eigenständigen Gehäuse 42 in Topfform aufgenommen, das einen Eingang 44 für den gasbelasteten Fluidstrom kopfseitig aufweist, der in Pfeilrichtung geführt von innen nach außen das Abscheideelement 10 durchströmt und dabei von einem möglichen Gaseintrag abgereinigt wird. Das auf die Reinseite 46 des Gehäuses 42 geführte, eventuell teilweise noch mit Gas belastete Fluid gelangt dann über einen bodenseitigen Kanal 48 im Gehäuse 42 auf die Innenseite 46 des gasabscheidenden Abscheideelementes 12, das dergestalt von innen nach außen durchströmt wird und bei der dahingehenden Durchströmung vergleichbar zu der aufgezeigten Lösung nach der Figur 8 von Gas befreit wird. Auch insoweit ist die mehrstufige Gasabtrennung wiederum in der Abfolge A, B, A, B für die Elemente 10, 12 gemäß der Prinzipdarstellung nach der Figur 8 veranlasst. Bodenseitig ist das Abscheideelement 12 mit einer unteren Endkappe 18 verschlossen. Ferner ist zur Trennung der verschiedenen Fluidräume voneinander innerhalb des Filtergehäuses 42 eine horizontal verlaufende Trennwand 50 integriert, die gleicherma-ßen als Halterung für das eine Abscheideelement 10 in der Art der oberen Endkappe 16 dient.

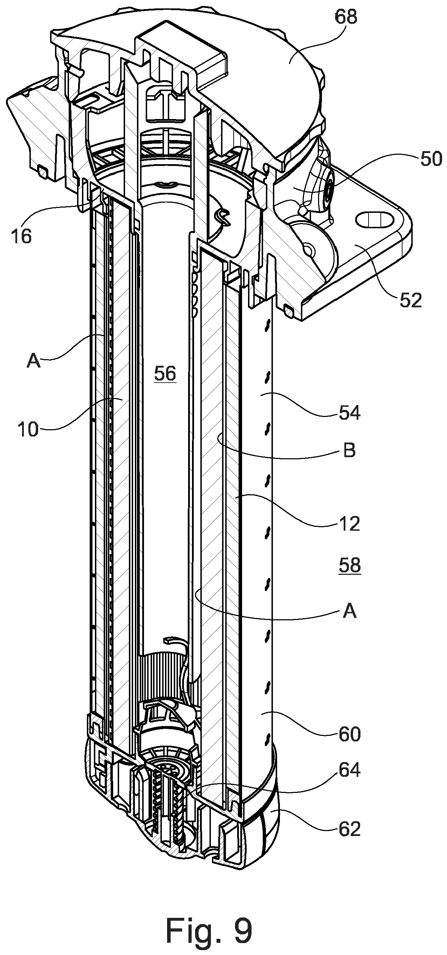

Die in Figur 9 gezeigte Abscheidevorrichtungslösung zeigt eine Umsetzung der Prinzipbilder nach den Figuren 1 bis 3 und 8 mit der Maßgabe, dass das Fluid über einen oberen Kopf 50 zugeführt wird. Der dahingehende Kopf 50 wird über einen vom Umfang her verbreiterten Auflageflansch 52 auf einen Tank montiert, der nicht dargestellt ist. Das außenumfangsseitige Gehäuserohr 54 der Vorrichtung ragt insoweit in den Tank hinein. Ein dahingehendes System bietet eine wirtschaftliche Lösung für eine Vollstrom-Rücklaufbehandlung von Fluid. Das über den Kopf 50 einströmende, unbehandelte Fluid gelangt von der Innenseite 56 der Abscheidevorrichtung auf die Außenseite 58, die sich insoweit in dem Vorratstank befindet. Die beiden Abscheideelemente 10, 12 nach der Figur 9 sind wiederum in konzentrischer Anordnung in dem Gehäuserohr 54 als einer Art Gehäuse aufgenommen, das zumindest im unteren Bereich 52 mit nicht dargestellten Fluiddurchlassstellen versehen ist. Die genannten Fluiddurchlassstellen sind insoweit in dem mantelförmigen Gehäuserohr 54 des Vorrichtungsgehäuses aufgenommen, das sich zwischen dem Kopf 50 und einem fußseitigen Bodenteil 62 des genannten Gehäuses erstreckt. Das Bodenteil 62 ist insbesondere mit einem Bypassventil 64 auf seiner Innenseite versehen, das geöffnet den direkten bodenseitigen Fluidzugang von der Innenseite 56 zur Außenseite 58 in den nicht dargestellten Vorratstank freigibt, sobald zumindest eines der beiden Abscheideelemente 10, 12 durch eine etwaig auftretende, zusätzliche Partikelverschmutzung zugesetzt respektive verblockt ist. Insoweit erfolgt dann der Fluidaustritt auf der Unterseite des fußseitigen Bodenteils 62 und den Abscheideelementen 10, 12 kommt jeweils eine teilweise Filtrationswirkung gegen Partikelverschmutzung zu.

Wie bereits ausgeführt, ist die in Figur 9 gezeigte Abscheidevorrichtung als sogenannte In-Tank-Lösung in dem Fluidvorratstank aufgenommen und der Fluidzulauf kann über eine nicht näher dargestellte Verrohrung über den Kopf 50 auf die Innenseite 56 der Abscheidevorrichtung erfolgen. Der dahingehende Aufbau ist üblich, so dass an dieser Stelle hierauf nicht mehr eingegangen wird. Gemäß der Darstellung nach der Figur 9 umgreift wiederum das gasabscheidende Abscheideelement 12 konzentrisch das innenliegende gasabscheidende Abscheideelement 10 und bei der vorgesehenen Durchströmungsrichtung von der Innenseite 56 oder Anströmseite A aus nach außen, erfolgt gemäß der Darstellung nach der Figur 8 ein weiterer Gasaustrag auf der außen liegenden Abströmseite B des innenliegenden Abscheideelementes 10 und weiter erfolgt ein Gasaustrag auf der inneren Anströmseite A des außenliegenden Abscheideelementes 12 sowie auf der Abströmseite B an der Außenseite des Abscheideelementes 12. Insoweit erfolgt ein Gasaustrag auf der Innenseite des Abscheideelementes 10 sowie in dem Fluidraum 14 zwischen den beiden Abscheideelementen 10, 12 und auf der Außenseite des Abscheideelementes 12, so dass insgesamt durch den Einsatz zweier gasabscheidender Abscheideelemente 10, 12 ein optimaler Gasaustrag auf vier voneinander verschiedenen Seiten aus dem Fluid ermöglicht ist.

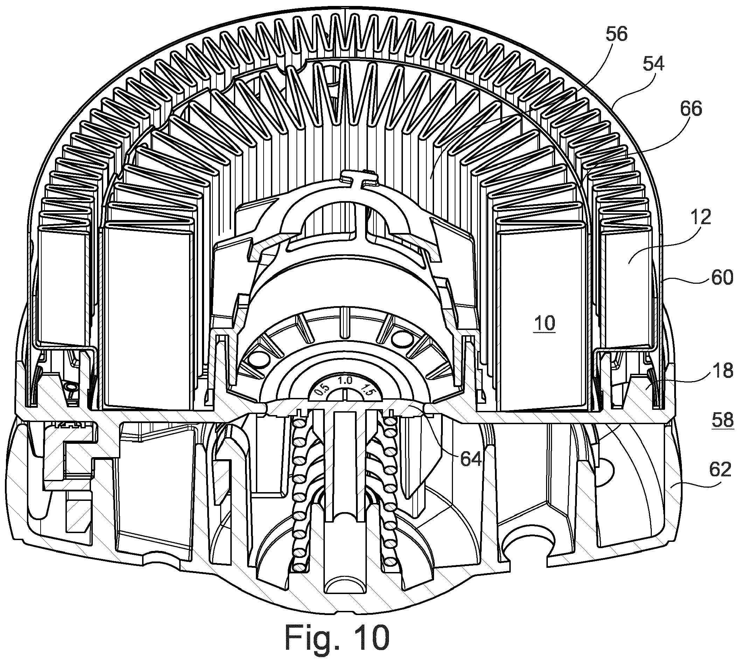

Jedenfalls gelangen bevorzugt alle Gasblasen 30 auf die Außenseite 58 der Abscheidevorrichtung und steigen unterhalb eines Fluidniveaus im Vorratstank aufgrund des archimedischen Prinzips auf, so dass eine Luftabscheidung oberhalb des Fluidniveaus in den Vorratstank hinein erfolgt. Insbesondere lassen sich mit der Abscheidevorrichtung nach der Figur 9 ungewollte Aufschäumvorgänge innerhalb eines Fluids, wie Hydrauliköl, bei Betrieb einer nicht dargestellten Hydraulikanlage durch die einzelnen Gasabscheidestufen A, B, A, B verhindern. Ferner dient der Hohlraum 14 zwischen den beiden Abscheideelementen 10, 12 als eine Art Beruhigungsstrecke für das Ausgasen und ebenso ist eine dahingehende Beruhigungsstrecke geschaffen, indem das Gehäuserohr 54 mit seinem Mantel mit einem vorgebbaren Abstand den Außenumfang des plissierten äußeren Abscheideelementes 12 umgibt. Darüber hinaus kann sich bei entsprechender Druckspitzenbeanspruchung das Abscheideelement 12 am Innenumfang des Gehäuserohres 54 abstützen, wie sich dies insbesondere aus der Darstellung nach der Figur 10 ergibt. Eine dahingehend weitere Abstützmöglichkeit bildet auch ein zusätzliches Gehäuse- oder Stützrohr 66, das sich zwischen den beiden Abscheideelementen 10, 12 befindet.

Wie sich weiter aus der Figur 10 ergibt, sind die beiden Abscheideelemente 10, 12 bodenseitig gemeinsam in der unteren Endkappe 18 aufgenommen, die trennbarer Bestandteil des fußseitigen Bodenteils 62 ist. Die dahingehend untere Endkappe 18 nimmt in integraler Bauweise das federbelastete Bypassventil 64 auf. Ferner wird aus Figur 10 ersichtlich, dass beide Abscheideelemente 10, 12 gemeinsam Bestandteil der unteren Endkappe 18 sind und vorzugsweise ebenso Bestandteil der oberen Endkappe 14, so dass sich beide Elemente 10, 12 im Bedarfsfall gemeinsam tauschen lassen. Es besteht aber auch die Möglichkeit (nicht dargestellt) für jedes Abscheideelement 10, 12 eine eigenständige Endkappe vorzusehen, so dass beispielsweise das innere Abscheideelement 10 getauscht werden kann, wohingegen das äußere Element 12 gehäuseseitig mit dem Mantel 54 in der Tankvorrichtung verbleibt. Da die Durchströmung von innen nach außen erfolgt, kann neben der Gasabscheidung das Abscheideelement 10 auch dazu dienen, zumindest in begrenztem Umfang und nur im Bedarfsfall eine Partikelverschmutzung im Fluid abzureinigen. Vorzugsweise wird jedoch an anderer Stelle im hydraulischen Versorgungskreis mittels einer eigenständigen Filtervorrichtung eine Partikelabreinigung des Fluidstroms vorgenommen werden, wohingegen bei einem Versagen dieser Filtervorrichtung, die vorliegende Abscheidevorrichtung mit ihren beiden gasabscheidenden Elementen 10, 12 auch insoweit als Filterelemente dienen. Unabhängig welcher Elementtausch angedacht ist, lässt sich das jeweilige Element 10, 12 aber in jedem Fall über die Oberseite des Kopfes 50 entnehmen, sofern ein Deckelteil 68 vom sonstigen Kopf 50 abgenommen wir, beispielsweise in Form eines Abschraubvorganges.

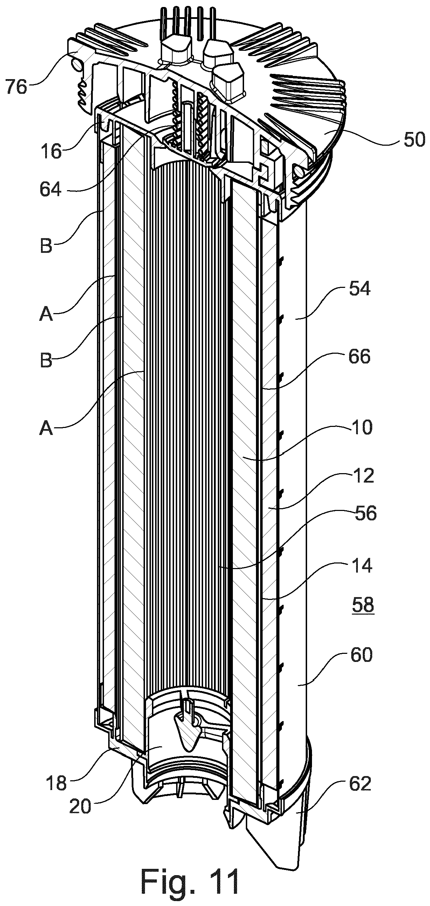

Eine weitere Ausgestaltung einer Abscheidevorrichtung nach der Figur 11 erlaubt nunmehr eine Zufuhr über die Mittenöffnung 20 in der unteren Endkappe 18, so dass die Lösung nach der Figur 11 weitgehend der Prinziplösung nach der Figur 1 entspricht. Im dahingehenden Fall ist nunmehr das Bypassventil 64 im Filterkopf 50 untergebracht, der mit einem Außengewinde 69 versehen in ein nicht dargestelltes Tankgehäuse einschraubbar ist. Insoweit kommt dem Kopf 50 auch die Funktion des abnehmbaren Deckelteiles 68 zu.

Auch insoweit betrifft die Lösung nach der Figur 11 eine Art Rücklaufanordnung, der besonders für kleinere bis mittlere Durchflussmengen geeignet ist. Auch insoweit wird die gezeigte Abscheidevorrichtung nach der Figur 11 in einem Tank montiert und nunmehr durch einen Rohranschluss von unten mit Fluid auf seiner Innenseite 56 angeströmt. Ansonsten ist der wesentliche Aufbau unter Einsatz von zwei gasabscheidenden Abscheideelementen 10, 12 wie bereits beschrieben ausgeführt.

Durch den speziellen Gewebelagenaufbau 22, gemäß der Darstellung nach der Figur 8, ist nicht nur eine Abscheidung über Koaleszenz sondern vielmehr auch unter Einbeziehen des Salvinia-Effektes möglich, was so im Bereich von Abscheidevorrichtungen bisher nicht umgesetzt worden ist und was entscheidend zur Verbesserung der Gasabscheidung mit beiträgt. Da das Gas länger am Element anhaftet, bis es eine Menge erreicht hat, deren Auftrieb größer ist, als die Anhaftung mittels des Salvinia-Effektes, lassen sich dergestalt größere Gasansammlungen auf einmal abscheiden, was die Abscheideleistung erhöht.

## Patentansprüche

1. Abscheidevorrichtung zumindest bestehend aus zwei Abscheideelementen (10, 12), die in Fluid-Durchströmungsrichtung gesehen hintereinander angeordnet sind, **dadurch gekennzeichnet, dass** die beiden Abscheideelemente (10, 12) der Gasabscheidung dienen, dass das jeweils gasabscheidende Abscheideelement (10, 12) mindestens zwei Lagen (24, 26) aufweist, die jeweils Fluiddurchlässe unterschiedlicher Größe aufweisen, und dass in Fluid-Durchströmungsrichtung gesehen, die Lage (24) mit den größeren Fluiddurchlässen der Lage (26) mit den kleineren Fluiddurchlässen vorangeht.

2. Abscheidevorrichtung nach Anspruch 1, **dadurch gekennzeichnet, dass** die Lage (26) mit den kleineren Fluiddurchlässen, als Zwischenlage, zwischen zwei Lagen (24) mit demgegenüber größeren Fluiddurchlässen, als Decklagen, aufgenommen ist.

3. Abscheidevorrichtung nach Anspruch 1 oder 2, **dadurch gekennzeichnet, dass** die jeweilige Lage (24, 26) aus einem Gewebe gebildet ist, das vorzugsweise in Leinwandbindung ausgeführt ist.

4. Abscheidevorrichtung nach einem der vorstehenden Ansprüche, **dadurch gekennzeichnet, dass** die jeweils eine Lage einzelne
- Durchlässe aufweist, die jeweils etwa 5 bis 11 Mal so groß sind wie der jeweilige Durchlass der in Durchströmungsrichtung gesehen nachfolgenden Lage (26), und
- Fadendurchmesser aufweist, die jeweils etwa 2 bis 5 Mal so groß sind wie der jeweilige Fadendurchmesser der nachfolgenden Lage (26).

5. Abscheidevorrichtung nach einem der vorstehenden Ansprüche, **dadurch gekennzeichnet, dass** es zu einer Gasabscheidung auf der Anströmseite A und/oder Abströmseite B der jeweils des gasabscheidenden Abscheideelementes (10, 12) kommt und/oder beim Durchströmen desselben.

6. Abscheidevorrichtung nach einem der vorstehenden Ansprüche, **dadurch gekennzeichnet, dass** die beiden, vorzugsweise plissierten, Abscheideelemente (10, 12) konzentrisch zueinander angeordnet zwischen sich einen ringförmigen Fluidraum (14) begrenzen oder dass abstandsfrei das eine gasabscheidende Abscheideelement (10) in das andere gasabscheidende Abscheideelement (12) mit eingefaltet ist.

7. Abscheidevorrichtung nach einem der vorstehenden Ansprüche, **dadurch gekennzeichnet, dass** beide Abscheideelemente (10, 12) eine als Ganzes tauschbare Einheit bilden.

8. Abscheidevorrichtung nach einem der vorstehenden Ansprüche, **dadurch gekennzeichnet, dass** die beiden gasabscheidenden Abscheideelemente (10, 12) gemeinsam einen Innenraum (56) miteinander begrenzen, der die Zulaufseite darstellt und dass ausgehend vom Innenraum (56) in Fluid-Durchströmungsrichtung gesehen von innen nach außen der Fluidfluss durch die Abscheideelemente (10, 12) gleichermaßen erfolgt.

9. Abscheidevorrichtung nach einem der vorstehenden Ansprüche, **dadurch gekennzeichnet, dass** die beiden Abscheideelemente (10, 12) als Einheit eine Tankeinbaugruppe miteinander bilden.

10. Abscheideelement, insbesondere für eine Abscheidevorrichtung, nach einem der vorstehenden Ansprüche **dadurch gekennzeichnet, dass** es aus mindestens einem zweilagigen, vorzugsweise plissierten, Gewebeaufbau (22) besteht und dass alle Gewebelagen (24, 26) in Leinwandbindung ausgeführt sind, mit einer Maschenweite zwischen 200 bis 800 *µ*m und einem Fadendurchmesser zwischen 100 bis 200 *µ*m für die jeweilige eine Lage (24), und mit einer Maschenweite von 15 bis 120 *µ*m und einem Fadendurchmesser von 30 bis 80 *µ*m für die jeweilige weitere Lage (26).
